# EUROPEAN PATENT SPECIFICATION

(11) **EP 3 019 439 B1**
(45) Date of publication and mention of the grant of the patent: **02.11.2016**
(21) Application number: 14739518.0
(22) Date of filing: 04.07.2014
(51) Int. Cl.: B67D 1/08

(54) **PRESSURE RELIEF SYSTEM FOR BEVERAGE CONTAINER**
DRUCKENTLASTUNGSSYSTEM FÜR GETRÄNKEBEHÄLTER
SYSTÈME DE RELÂCHEMENT DE PRESSION POUR CONTENEUR DE BOISSON

(30) Priority: 09.07.2013 GB 201312286
(43) Date of publication of application: 18.05.2016
(73) Proprietor: CypherCo Limited, Rotherwas Industrial Estate Hereford HR2 6FE (GB)
(72) Inventor: WHEATON, Simon, Hereford Herefordshire HR2 6FE (GB)
(74) Representative: Somervell, Thomas Richard
(86) International application number: PCT/GB2014/052040
(87) International publication number: WO 2015/004429

(56) References cited:
- EP-A1- 0 949 195
- EP-A1- 2 080 709
- EP-A1- 2 505 546
- WO-A1-97/21614

## Description

### FIELD OF THE INVENTION

The present invention relates to pressure relief system for a beverage container.

### BACKGROUND TO THE INVENTION

Containers for the storage of carbonated beverages, such as a keg for the storage of beer, have a specified maximum working pressure. However, there are circumstances under which the maximum working pressure can be exceeded. It is possible for pressure to build up when pressurised gas is added to the container *via* a specialised valve used to dispense the beverage. An excessive build-up of pressure could have undesirable or unsafe consequences. Therefore, as a precaution, there should be a mechanism to vent any pressure which builds up above the maximum working pressure of the container.

Typically, standalone containers for carbonated beverages have relied on bursting discs. However, these discs are designed to rupture at pre-determined pressures, which are at much higher values than the maximum working pressure. These bursting discs are also single use. Once they have burst they have to be replaced.

It is an aim of the present invention to provide an improved pressure relief system.

WO 97/21614 describes a valve assembly for fluid ingress and egress in accordance with the preamble of claim 1.

### SUMMARY OF THE INVENTION

According to the present invention there is provided a pressure relief system for a beverage container as recited in claim 1. The pressure relief system comprises;
an insertion member;
a collar, said collar being adapted to form a sealing fit within an opening of the beverage container and having an inner tapered contact surface;
a seal, said seal being in engagement between the insertion member and the inner tapered contact surface; and
a spring, said spring biasing the insertion member into sealing engagement with the collar;
wherein, when a pre-determined pressure is reached within the beverage container, the pressure acting on the insertion member compresses the spring so that movement of the insertion member causes the seal to move outwardly of the container along the inner tapered contact surface to a point at which the insertion member is forced out of sealing engagement with the collar to relieve the pressure.

It is to be understood that the pre-determined pressure is in excess of the maximum working pressure of the beverage container. An advantage of this pressure relief system, in comparison to bursting discs for example, is that the excess pressure can be vented at a value much closer to the maximum working pressure of the beverage container. Different beverages may require different maximum working pressures to others. Different maximum working pressures can be provided for by using different springs.

Furthermore, bursting discs are one-shot i.e. once they have burst the keg can no longer contain any pressure. With this invention, once some pressure has been released, the spring will cause the insertion member to move back into sealing engagement with the collar.

The beverage container may be any container suitable for carbonated beverages. In one embodiment the beverage container is a keg. The beverage container may be a beer keg.

In one embodiment the insertion member is a valve for dispensing a beverage from the container. In another embodiment the insertion member is a stopper.

The collar may be sealed within the opening of the beverage container before the insertion member is put in place. The collar may be adapted to be reversibly fastened to the opening of the beverage container by means of a screw thread. The collar may be formed of any material, such as metal or plastics, suitable for withstanding the operating stresses resulting from the applied pressure. As an alternative to a removable fastening such as a screw thread, the collar may be secured by swaging, welding or similar techniques.

Preferably, the inner tapered contact surface is arranged such that the diameter increases from the inside towards the outside of the container. An advantage of a tapered inner contact surface is to ensure ease of movement of the seal along the surface when the pressure relief system is activated.

In one embodiment, the seal comprises an O-ring around the insertion member. The seal may be situated in a groove around the insertion member. It is to be understood that compression of the O-ring seal against the tapered surface enhances the sealing engagement between the insertion member and the collar.

The spring biases the insertion member into sealing engagement with the collar to ensure there is no leakage of liquid or gas. The spring may be supported by a flange or other suitable support on the insertion member. Embodiments may provide for the spring to be removable and to be replaced. This advantageously allows for different pressure relief values to be set by using different springs. In one such embodiment the insertion member is formed of a material that can be resiliently deformed to allow removal/replacement of the spring. The insertion member may have a retaining flange for supporting the spring and comprise a plurality of axially extending limbs that can be squeezed together to allow the spring to be removed or inserted over the retaining flange.

When the system is activated, the seal moves outwardly of the container along the inner tapered contact surface. It is to be understood that the compression of the seal reduces to a point where the pressure can force fluid past the seal.

In one embodiment, after the pressure has been released to below the pre-determined pressure, the spring biases the insertion member back into sealing engagement with the collar and the movement of the insertion member forces the seal to move inwardly of the container along the inner tapered contact surface so that the seal is re-engaged between the insertion member and the inner tapered contact surface.

Therefore, another advantage of the present invention is that the pressure relief system is immediately re-sealable once the excess pressure has been released. This is in contrast to bursting discs which rupture and have to be replaced. The present invention therefore also reduces the time and costs associated with replacing parts such as bursting discs.

### BRIEF DESCRIPTION OF THE DRAWINGS

An embodiment of the invention will now be described by way of example only with reference to the accompanying drawings in which:
Fig. 1 shows a pressure relief system for a beverage container in accordance with an embodiment of the present invention.
Fig. 2 shows a cross-section view of a pressure relief system in accordance with an embodiment of the present invention in a sealed position.
Fig. 3 shows a cross-section view of a pressure relief system in accordance with an embodiment of the present invention in a venting position.

### DETAILED DESCRIPTION OF A CERTAIN EMBODIMENT

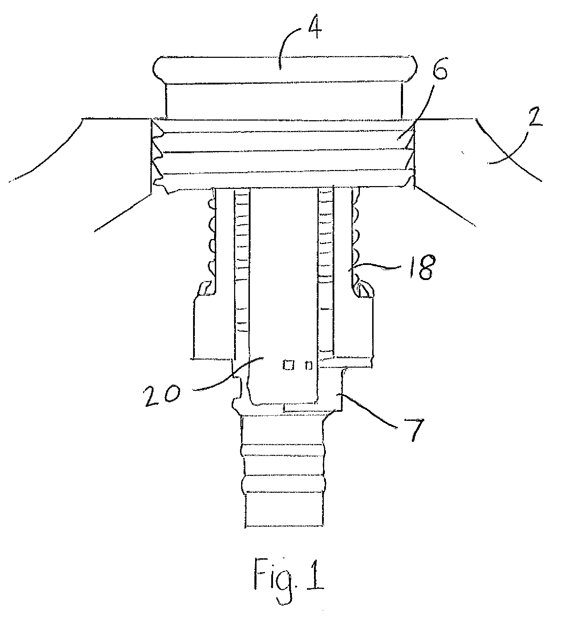

With reference to fig. 1, there is illustrated a pressure relief system for a beverage container such as a keg. There is an insertion member 4, which is inserted into an opening in a neck 2 of the container and secured in place by a collar 6. The insertion member 4 is illustrated as being a valve for dispensing a beverage from the container and includes associated valve apparatus and tubing 7. The beverage is typically a carbonated beverage. The collar 6 is adapted to seal with the opening in the neck 2 of the beverage container. The seal between the collar 6 and the opening in the neck 2 of the beverage container may be formed before the insertion member 4 is put in place.

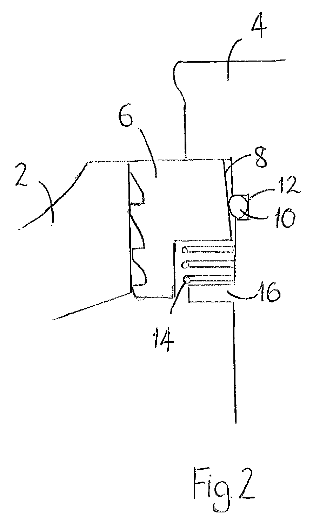

Fig. 2 shows the insertion member 4 in a sealing engagement with the collar 6. The collar 6 forms a sealing fit with the opening in the neck 2 of the beverage container, and has an inner tapered contact surface 8. The inner tapered contact surface 8 is arranged such that the diameter increases from the inside towards the outside of the container. Between the inner tapered contact surface 8 and the insertion member 4 is a seal 10. The seal 10 is preferably an O-ring around the insertion member 4. The seal 10 may be situated in a groove 12 around the insertion member 4. Between the collar 6 and the insertion member 4, there is also a spring 14. The spring 14 is a helical spring that runs around the insertion member 4 and is supported by a flange 16 projecting from the insertion member 4. It will be appreciated that other types of spring, such as torsion springs may be used to provide a similar effect.

The spring 14 is biased to keep the insertion member 4 in sealing engagement with the collar 6. This is to ensure there is no leakage of liquid or gas from between the insertion member 4 and the collar 6. The sealing of the beverage container is enhanced by the seal 10 being compressed between the insertion member 4 and the inner tapered contact surface 8. The spring 14 keeps the insertion member 4 and collar 6 in sealing engagement until the maximum working pressure of the beverage container is exceeded.

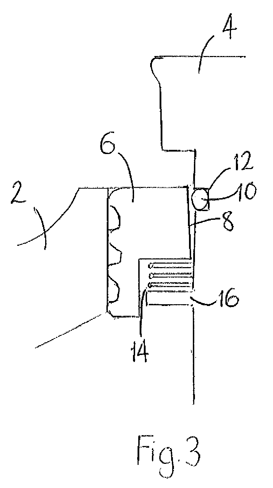

Fig. 3 shows the insertion member 4 in a venting position in relation to the collar 6. When the pressure within the beverage container reaches a pre-determined value the pressure release system is activated. The pre-determined pressure is in excess of the maximum working pressure of the beverage container. One advantage of this pressure relief system, in comparison with bursting discs, is that the excess pressure can be vented at a value much closer to the maximum operating pressure of the beverage container.

When the pre-determined pressure within the beverage container is reached, the pressure acting on the insertion member 4 compresses the spring 14. The outwards movement of the insertion member 4 in relation to the collar 6, causes the seal 10 to move outwardly of the container along the inner tapered contact surface 8. The seal 10 is moved outwardly to a point at which the compression of the seal gets reduced and the insertion member 4 has been forced out of sealing engagement with the collar 6. At this point the pressure can force past the seal and the excess pressure is released.

Once the excess pressure has been released and the pressure within the beverage container is below the pre-determined pressure, the spring 14 biases the insertion member 4 back into sealing engagement with the collar 6. The inwards movement of the insertion member 4 in relation to the collar 6, forces the seal 10 to move inwardly of the container along the inner tapered contact surface 8 so that it is re-engaged between the insertion member 4 and the inner tapered contact surface 8. The sealing engagement between the insertion member 4 and the collar 6 is restored to prevent leakage of any liquid or gas from the beverage container and to maintain the pressure inside the keg below the maximum working pressure.

The pressure relief system of the present invention is not dependent on orientation. This is in contrast to some previous pressure relief systems, which do not operate unless the system is located at the top of the beverage container. The present system will also function, for example, in an inverted position.

Referring again to Fig. 1, the insertion member 4 has limbs 18, 20, which extend through the collar 6 into the interior of the container. The insertion member is formed of a resiliently deformable material. Prior to insertion of the insertion member into the collar, the limbs 18, 20, can be squeezed together to reduce the diameter of the insertion member 4 at the location of the supporting flange 16 (see Figs 2 and 3) sufficient to allow the spring 14 to be removed by slipping it over the flange 16. A replacement spring may then be provided by slipping it over the flange and releasing the limbs 18, 20 to return to their original positions. In this way springs having different compression characteristics may be used to provide different relief pressures.

## Claims

1. A pressure relief system for a beverage container, said pressure relief system comprising
an insertion member (4);
a collar (6), said collar being adapted to form a sealing fit within an opening of the beverage container (2) and having an inner contact surface (8);
a seal (10), said seal being in engagement between the insertion member and the inner contact surface (8); and
a spring (14);
wherein, when a pre-determined pressure is reached within the beverage container, the pressure acting on the insertion member (4) compresses the spring (14);
**characterised in that**;
the inner contact surface (8) is tapered;
the spring (14) biases the insertion member (4) into sealing engagement with the collar (6); and
compression of the spring (14) causes movement of the insertion member (4) such that the seal (10) moves outwardly of the container along the inner tapered contact surface (8) to a point at which the insertion member (4) is forced out of sealing engagement with the collar (6) to relieve the pressure.

2. The pressure relief system of claim 1, wherein the insertion member (4) is a valve for dispensing a beverage from the container.

3. The pressure relief system of claim 1, wherein the insertion member (4) is a stopper.

4. The pressure relief system of any preceding claim, wherein the collar (6) is sealed within the opening of the beverage container (2) before the insertion member (4) is put in place.

5. The pressure relief system of any preceding claim, wherein the inner tapered contact surface (8) is arranged such that the diameter increases from the inside towards the outside of the container.

6. The pressure relief system of any preceding claim, wherein the seal (10) comprises an O-ring around the insertion member (4).

7. The pressure relief system of any preceding claim, wherein after the pressure has been released to below the pre-determined pressure, the spring (14) biases the insertion member (4) back into sealing engagement with the collar (6) and the movement of the insertion member (4) forces the seal (10) to move inwardly of the container along the inner tapered contact surface (8) so that the seal (10) is re-engaged between the insertion member (4) and the inner tapered contact surface (8).

8. The pressure relief system of any preceding claim wherein the spring (14) is removable for replacement thereof.

9. The pressure relief system of claim 8, wherein the insertion member (4) is formed of a material that can be resiliently deformed to allow removal/replacement of the spring (14).

10. The pressure relief system of claim 9, wherein the insertion member (4) has a retaining flange (16) for supporting the spring (14) and comprises a plurality of axially extending limbs (18) (20) that can be squeezed together to allow the spring to be removed or inserted over the retaining flange (16).

11. The pressure relief system of any preceding claim, wherein the beverage container is a keg.

## Patentansprüche

1. Druckentlastungssystem für einen Getränkebehälter, wobei das Druckentlastungssystem Folgendes umfasst:
ein Einführelement (4);
einen Kragen (6), wobei der Kragen angepasst ist, um eine Dichtpassung in einer Öffnung des Getränkebehälters (2) zu formen, und eine innere Kontaktfläche (8) aufweist;
eine Dichtung (10), wobei die Dichtung zwischen dem Einführelement und der inneren Kontaktfläche (8) in Eingriff steht; und
eine Feder (14);
wobei, wenn ein vorher festgelegter Druck in dem Getränkebehälter erreicht wird, der Druck, der auf das Einführelement (4) wirkt, die Feder (14) zusammendrückt; **dadurch gekennzeichnet, dass**;
die innere Kontaktfläche (8) kegelförmig ist;
die Feder (14) das Einführelement (4) in einen dichtenden Eingriff mit dem Kragen (6) spannt; und
das Zusammendrücken der Feder (14) eine Bewegung des Einführelements (4) verursacht, sodass sich die Dichtung (10) entlang der inneren kegelförmigen Kontaktfläche (8) aus dem Behälter heraus zu einem Punkt bewegt, an dem das Einführelement (4) aus dem dichtenden Eingriff mit dem Kragen (6) gedrängt wird, um den Druck abzulassen.

2. Druckentlastungssystem nach Anspruch 1, wobei das Einführelement (4) ein Ventil zum Verteilen eines Getränks aus dem Behälter ist.

3. Druckentlastungssystem nach Anspruch 1, wobei das Einführelement (4) ein Stopfen ist.

4. Druckentlastungssystem nach einem der vorhergehenden Ansprüche, wobei der Kragen (6) in der Öffnung des Getränkebehälters (2) abgedichtet wird, bevor das Einführelement (4) platziert wird.

5. Druckentlastungssystem nach einem der vorhergehenden Ansprüche, wobei die innere kegelförmige Kontaktfläche (8) so angeordnet ist, dass der Durchmesser von der Innenseite zu der Außenseite des Behälters zunimmt.

6. Druckentlastungssystem nach einem der vorhergehenden Ansprüche, wobei die Dichtung (10) einen O-Ring um das Einführelement (4) umfasst.

7. Druckentlastungssystem nach einem der vorhergehenden Ansprüche, wobei, nachdem der Druck bis unter den vorher festgelegten Druck abgelassen wurde, die Feder (14) das Einführelement (4) zurück in einen dichtenden Eingriff mit dem Kragen (6) spannt und die Bewegung des Einführelements (4) die Dichtung (10) dazu drängt, sich entlang der inneren kegelförmigen Kontaktfläche (8) in dem Behälter nach innen zu bewegen, sodass die Dichtung (10) zwischen dem Einführelement (4) und der inneren kegelförmigen Kontaktfläche (8) wieder in Eingriff steht.

8. Druckentlastungssystem nach einem der vorhergehenden Ansprüche, wobei die Feder (14) zwecks ihrer Ersetzung herausnehmbar ist.

9. Druckentlastungssystem nach Anspruch 8, wobei das Einführelement (4) aus einem Material geformt wird, das elastisch verformt werden kann, um eine Entfernung/Ersetzung der Feder (14) zu ermöglichen.

10. Druckentlastungssystem nach Anspruch 9, wobei das Einführelement (4) einen Halteflansch (16) zum Abstützen der Feder (14) aufweist und eine Vielzahl von sich axial erstreckenden Gliedern (18) (20) umfasst, die zusammengepresst werden können, um zu ermöglichen, dass die Feder über dem Halteflansch (16) entfernt oder eingebracht werden kann.

11. Druckentlastungssystem nach einem der vorhergehenden Ansprüche, wobei der Getränkebehälter ein Fass ist.

## Revendications

1. Système de décharge de pression pour un récipient de boisson, ledit système de décharge de pression comprenant :
un élément d'insertion (4) ;
un collier (6), ledit collier étant adapté pour établir un ajustement étanche dans une ouverture du récipient de boisson (2) et comportant une surface de contact interne (8) ;
un joint d'étanchéité (10), ledit joint d'étanchéité étant engagé entre l'élément d'insertion et la surface de contact interne (8) ; et
un ressort (14) ;
dans lequel, lors de l'atteinte d'une pression prédéterminée dans le récipient de boisson, la pression agissant sur l'élément d'insertion (4) comprime le ressort (14) ; **caractérisé en ce que** :
la surface de contact interne (8) est effilée ;
le ressort (14) pousse l'élément d'insertion (4) jusqu'à son engagement étanche dans le collier (6) ; et
la compression du ressort (14) entraîne le déplacement de l'élément d'insertion (4), de sorte que le joint d'étanchéité (10) se déplace vers l'extérieur du récipient, le long de la surface de contact interne effilée (8), vers un point au niveau duquel l'élément d'insertion (4) est dégagé de son engagement étanche dans le collier (6) en vue d'une décharge de la pression.

2. Système de décharge de pression selon la revendication 1, dans lequel l'élément d'insertion (4) est une soupape destinée à distribuer une boisson à partir d'un récipient.

3. Système de décharge de pression selon la revendication 1, dans lequel l'élément d'insertion (4) est un bouchon.

4. Système de décharge de pression selon l'une quelconque des revendications précédentes, dans lequel le collier (6) est fixé de manière étanche dans l'ouverture du récipient de boisson (2) avant la mise en place de l'élément d'insertion (4).

5. Système de décharge de pression selon l'une quelconque des revendications précédentes, dans lequel la surface de contact interne effilée (8) est agencée de sorte que le diamètre est accru de l'intérieur vers l'extérieur du récipient

6. Système de décharge de pression selon l'une quelconque des revendications précédentes, dans lequel le joint d'étanchéité (10) comprend un joint torique d'étanchéité entourant l'élément d'insertion (4).

7. Système de décharge de pression selon l'une quelconque des revendications précédentes, dans lequel, après la décharge de la pression à une pression inférieure à la pression prédéterminée, le ressort (14) pousse de nouveau l'élément d'insertion (4) jusqu'à son engagement étanche dans le collier (6), le déplacement de l'élément d'insertion (4) forçant le joint d'étanchéité (10) à se déplacer vers l'intérieur du récipient, le long de la surface de contact interne effilée (8), de sorte que le joint d'étanchéité (10) est de nouveau engagé entre l'élément d'insertion (4) et la surface de contact interne effilée (8).

8. Système de décharge de pression selon l'une quelconque des revendications précédentes, dans lequel le ressort (14) peut être retiré en vue de son remplacement.

9. Système de décharge de pression selon la revendication 8, dans lequel l'élément d'insertion (4) est composé d'un matériau se prêtant à une déformation élastique pour permettre le retrait/le remplacement du ressort (14).

10. Système de décharge de pression selon la revendication 9, dans lequel l'élément d'insertion (4) comporte une bride de retenue (16) pour supporter le ressort (14), et comprend plusieurs branches à extension axiale (18 (20), pouvant être rapprochées par serrage pour permettre le retrait ou l'insertion du ressort au-dessus de la bride de retenue (16).

11. Système de décharge de pression selon l'une quelconque des revendications précédentes, dans lequel le récipient de boisson est un barillet.
